(19) Europäisches Patentamt
European Patent Office
Office européen des brevets

(11) Publication number: **0 398 648 A2**

# (12) EUROPEAN PATENT APPLICATION

(21) Application number: **90305221.5**

(51) Int. Cl.[5]: **G06F 3/023**

(22) Date of filing: **15.05.90**

(30) Priority: **15.05.89 US 352800**

(43) Date of publication of application:
**22.11.90 Bulletin 90/47**

(84) Designated Contracting States:
**DE FR GB IT**

(71) Applicant: **International Business Machines Corporation**
**Old Orchard Road**
**Armonk, N.Y. 10504(US)**

(72) Inventor: **Green, Emily Ann**
**8400 Bridgetown Drive**
**Austin, Texas 78753(US)**
Inventor: **Malcolm, Jerry Walter**
**12040 Lincolnshire**
**Austin, Texas 78758(US)**
Inventor: **Nguyen, Ha Hoang**
**6802 Tree Fern Lane**
**Austin, Texas 78750(US)**
Inventor: **Roosken, Cynthia Ann**
**10706 Yucca Drive**
**Austin, Texas 78759(US)**

(74) Representative: **Bailey, Geoffrey Alan**
**IBM United Kingdom Limited Intellectual Property Department Hursley Park**
**Winchester Hampshire SO21 2JN(GB)**

## (54) Information processing system user interface.

(57) An application or terminal emulation program, which is being executed on an information processing system, is represented by the display of a first icon on a display device. If during the execution of the application or terminal emulation program, a virtual display buffer associated with the application program, is updated, a second icon is displayed on the display device to indicate to a user of the system that a change in the status of the program has occurred.

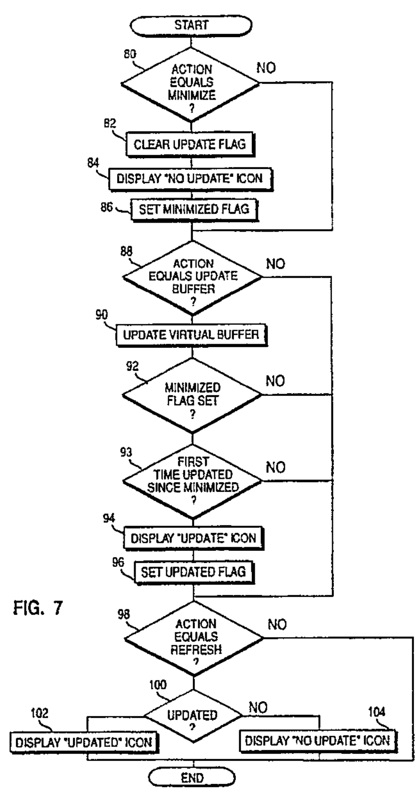

FIG. 7

EP 0 398 648 A2

# INFORMATION PROCESSING SYSTEM USER INTEREACE

This invention relates to multitasking information processing systems. More particularly, the invention relates to the user interface of information processing systems.

In multitasking operating systems, an end user may execute several application programs simultaneously. The user interacts with only one of the application programs at a time. Windowing systems have been utilized with multitasking operating systems wherein each of the application programs is associated with a respective window and is displayed on a portion of the user's display unit. The user may size and move a selected window. Additionally, all or a portion of several windows may be visible at a given time. The user may choose to change the appearance of the application program from a window to an icon which pictorially represents the associated application program. This procedure is called "minimizing" an application. The icon generally remains visible on the display while the user operates in an active or a primary window. Moreover, the execution of application continues even though the application program is being represented by the icon. A plurality of icons may be utilized to represent respective application programs. When a selected application program has been minimized, the application program maintains, in a virtual buffer, an internal representation of the data which would have normally appeared in the window associated therewith.

Oftentimes, the user desires to know when a selected minimized application program has completed a desired task or reguires the attention of the user. In this case, the user must restore the appearance of the application to the window associated therewith. If the application has not completed the desired task or does not require attention, the user generally, minimizes the application in order to perform additional work in primary window or to check the status of another minimized application program. This process is tedious and time consuming. Moreover, the process is extremely time consuming when there are a plurality of icons representing respective application programs. In this case the user must restore and then minimize each of the applications to determine if any or all have completed their respective desired task or needs the attention of the user.

Viewed from one aspect the invention provides a method of monitoring the status of an application program being executed on an information processing system, comprising the steps of:
displaying a first icon associated with said application program on a display unit of said system;
determining whether a virtual display buffer associated with said application program has been updated; and
displaying, in response to said virtual display buffer being updated, a second icon associated with said application program on said display unit to indicate a change in the status of said application program.

The invention provides a way of monitoring an application whereby the user can determine the status thereof without restoring the application.

In preferred embodiments a first icon, which is associated with the application program, is displayed on a display device included in the information processing system. A determination is made as to when a virtual display buffer, which is associated with the application program, is updated. A second icon, which is also associated with the application program, is displayed in response to the virtual display buffer being updated to indicate a change in the status of the application program.

Viewed from a second aspect the invention provides an information processing system having means for monitoring the status of an application program comprising:
a display system displaying a first icon associated with said application program on a display unit of said system;
control logic determining whether a virtual display buffer associated with said application program has been updated; and
said display system displaying, in response to said virtual display buffer being updated, a second icon associated with said application program on said display unit to indicate a change in the status of said application program.

A number of embodiments of the invention will now be described by way of example only, with reference to the accompanying drawings in which:

Fig. 1 is a block diagram of an information processing system on which the method of the present invention may be employed.

Fig. 2 shows a single window which is associated with an application.

Fig. 3 shows a plurality of windows each of which is associated with a respective application.

Fig. 4 shows the plurality of windows of Fig. 3 whereby one of the windows has been minimized.

Fig. 5 show a no-update icon associated with a selected application program being executed on the system of Fig. 1.

Fig. 6 illustrates an update icon which is associated with the selected application program.

Figs. 7 through 9 are flow diagrams illustrating the detailed steps of an embodiment of the present invention.

Fig. 10 illustrates an alternate method of minimizing or restoring an application window.

Referring to Fig. 1, there is shown a computer system 10 on which the present invention may be employed. System 10 includes a central processing unit 12 having a microprocessor 14, a memory system 16 and a control system 18 which functions to control input/output operations in addition to the interaction between the microprocessor and the memory system. System 10 also includes a group of conventional peripheral units including a display device 20, a keyboard 22, a printer 24, a data storage unit 26, a modem 28 and a pointing device or mouse 29. Since the details of the above described peripheral units can be found in the prior art, only a brief functional description of each of the units will be set forth.

The central processing unit 12 corresponds to the "system unit" of a personal computer system such as an IBM XT, an IBM AT or an IBM Personal System/2 (IBM and Personal System/2 are trade marks of International Business Machines Corporation) computer system. The central processing unit 12 is provided with a multitasking operating system program such as the IBM Operating System/2 (Operating System/2 is a trade mark of International Business Machines Corporation) which is normally employed to run the selected computer system. The operating system program is stored in memory system 16 or in the data storage unit 26 along with one or more application programs which the user can select to be executed on the system 10. Depending on the capacity of the memory system 16 and the size of the application programs, portions of these programs, as needed, may be transferred to the memory system 16 from the data storage unit 26 which may include, for example, a hard disk drive and a diskette drive. The basic function of the data storage unit 26 is to store programs and data which are employed by the system 10 and which may readily be transferred to the memory system 16 when needed. The function of the diskette drive is to provide a removable storage function for entering programs and data into the system, and a vehicle for storing data in a form that is readily transportable for use on other computer systems.

Display device 20 and keyboard 22 together provide for an interactive operation of the computer system 10 wherein the interpretation that the computer system gives to a specific keystroke by the user depends, in substantially all situations, on what is being displayed to the user at that point in time. Additionally, interactive operation of the computer system 10 may also be provided by the display device 20 and the pointer device 29, such as a mouse, wherein the interpretation that the computer system gives to a specific position of a cursor depends, in substantially all situations, on what is being displayed to the user at that point in time.

In certain situations, the user, by entering commands into the computer system 10, causes the system to perform a certain function. In other situations, the computer system 10 requests the entry of certain data, generally by displaying a prompt type of menu/message screen. Moreover, the computer system 10 may be controlled by positioning the cursor coincident with a selected item on the menu/screen or a control area associated with a primary window being displayed on the display device 20. The depth of the interaction between the user and the computer system 10 varies by the type of operating system and the application program.

As noted above, computer system 10 includes the printer 24 which functions to provide a hard copy output of data developed or stored in the computer system. The modem 28 functions to transfer data from the computer system 10 to a host computer or server system 31 through one or more communication links which may be a commercial type link or a dedicated communications link.

Referring to Fig. 2, there is shown an application window 30 which is displayed on a screen of the display unit 20. The application window 30 includes a plurality of control areas 32, 34 and 36 arranged about the periphery thereof representing functions which are available for selection by the user. The control area 32 facilitates the display of a system menu within the window 30 for presenting several additional functions to a user of the system 10. Control area 34 facilitates the minimization of the application window 30. When the application window 30 is minimized, the entire appearance of the window is replaced by an icon associated therewith. Control area 36 facilitates the scrolling of information associated with an application program within the application window 30. Control area 38 represents a sizing border of the application window 30. When the cursor is positioned coincident with the sizing border and a button on the mouse 29 is depressed, the size of the window 30 may be made larger or smaller. In response to changing the size of the application window 30, other application windows, which may be displayed on the screen of the display device 20, may be obscured or made visible.

The application window 30 also includes a line 40 having a plurality of commands thereon. A selected one of the commands may be selected by positioning the cursor coincident with one of a desired command and depressing a button on the pointing device or mouse 29. Alternately, the desired command may be selected by entering a first letter of the desired command utilizing the keyboard 22. The application window 30 further includes a title bar 42 which is associated with an application program or terminal emulator. When the cursor is positioned coincident with the title bar 42 and a button on the mouse 29 is depressed, the window 30 may be moved to a different position on the screen of the display device 20.

Referring to Fig. 3, there is shown a plurality of application windows 44, 46, 48, 50 and 52 being displayed on the screen of the display device 20. Each of the application windows 44, 46, 48, 50 and 52 includes control areas which are similar to those included in the application window 30. Moreover, each of the application windows 44, 46, 48, 50 and 52 are associated with a respective application program or terminal emulator (a particular form of application program). As viewed in Fig. 3, application window 44 overlays application windows 46 and obscures a portion thereof. Application window 44 is a top-most window and, thus, is the primary or active window. The primary or active window is the only window which the user may interact. Thus, if the user desires to interact with window other than application window 44, each of the windows which overlay the desired window must be removed and/or minimized. A plurality of icons 54, which are displayed along a border of the screen of the display device 20, represent minimized application windows. Irrespective of whether an application program or terminal emulator is associated with an application window or with an icon, execution of the application program continues until a desired task associated therewith is completed or the application program requires the attention of the user.

Referring to Fig. 4, there is shown windows 46, 48, 50, and 52 of Fig. 3 and an additional icon 56 which represents the minimized application window 44. As is shown in Fig. 4, subsequent to the minimizing of application window 44, application window 46 becomes the primary or active window.

In the preferred embodiment of the present invention, each application program is assigned to two icons. For purposes of illustration and not limitation, shown in Figs. 5 and 6 are enlarged versions of a no-update icon 60 and an update icon 62, respectively. The no-update icon 60 represents a host computer system 64 coupled to a terminal 66 by a communication link 68. The terminal 66 includes a display unit 70. System 10 displays the no-update icon 60 during the execution of a selected application program which is associated with therewith. Subsequently, when the application program completes its assigned task or needs the attention of the user, system 10 then displays the update icon 62 on the screen of the display device. As is further shown in Fig. 6, the update icon 62 includes a display unit 72 which is different from the display unit 70 associated with the no-update icon 60. The display unit 72 represents a change in the virtual display buffer which is associated with the selected application program. Additionally, the communication link 74 represents a flow of data or information from the host computer 64 to a terminal 76. Thus, the user of system 10 can immediately determine whether the selected application program has completed its desired task or needs attention of the user without restoring the application window associated with the selected application program.

Referring to Fig. 7, there is shown a flow diagram of an icon routine to be included in application programs which are to be monitored on the information processing system 10. In step 80, system 10 determines whether an action to be performed on an application window associated with a selected application program is to minimize the application window. If the application window is to be minimized, steps 82, 84 and 86 clears an update flag, displays the no-update icon and sets a minimized flag, respectively. Step 88 determines whether the action to be performed is to update the virtual buffer associated with the selected application program. As noted above, an update of the virtual display buffer indicates a change of status of the selected application program. The change of status further indicates that the selected application program has completed its assigned task or that the selected application program needs the attention of the user. Step 90 updates the virtual display buffer. Step 92 determines whether the minimized flag is presently set. Step 93 determines whether the update to the virtual display buffer is a first update. If it is determined that the update is the first update steps 94 and 96 facilitates the replacing of the no-update icon with the display of the update icon and sets the update flag, respectively.

Step 98 determines whether the action to be performed is a refresh action. As noted above, an application window may overlay another window or an icon. The refresh action is performed when an icon has been obscured or overlayed by an application window and the window is either moved to a different position on the screen whereby the icon is no longer obscured or overlayed or the window is minimized. Step 100 determines whether the update flag has been set while the icon was obscured or overlayed. Step 102 displays the update icon if the update flag has been set. Step 104 displays a no-update icon if the update flag has not been set.

Referring to Fig. 8, there is shown a flow diagram of an alternate embodiment of the icon routine to be included in application programs which are to be monitored on the information processing system 10. As noted above, the preferred embodiment requires the assignment of two icon to each application program. The alternate embodiment only requires the assignment of a single status icon. However, the alternate embodiment utilizes different colors or shades of the status icon to indicate a status change of the application program. The flow diagram shown in Fig. 8 is similar to that shown in Fig. 7, thus, the similar numerals will be used to explain the alternate embodiment. In step 80′, system 10 determines whether an action to be performed on an application window associated with a selected application program is to minimize the application window. If the application window is to be minimized, steps 82′, 84′ and 86′ clears an update flag, displays the status icon utilizing a first color or shade and sets a minimized flag, respectively. Step 88′ determines whether the action to be performed is to update the virtual buffer associated with the selected application program. As noted above, an update of the virtual display buffer indicates a change of status of the selected application program. The change of status further indicates that the selected application program has completed its assigned task or that the selected application program needs the attention of the user. Step 90′ updates the virtual display buffer. Step 92′ determines whether the minimized flag is presently set. Step 93′ determines whether the update to the virtual display buffer is a first update. If it is determined that the update is the first update steps 94′ and 96′ facilitates the display of the status icon utilizing a second color or shade and sets the update flag, respectively.

Step 98′ determines whether the action to be performed is a refresh action. As noted above, an application window may overlay another window or an icon. The refresh action is performed when an icon has been obscured or overlayed by an application window and the window is either moved to a different position on the screen whereby the icon is no longer obscured or overlayed or the window is minimized. Step 100′ determines whether the update flag has been set while the icon was obscured or overlayed. Step 102′ displays the status icon utilizing the second color or shade if the update flag has been set. Step 104′ displays the status icon utilizing the first color or shade if the update flag has not been set.

Referring to Fig. 9, there is shown a flow diagram of a second alternate embodiment of the icon routine to be included in application programs which are to be monitored on the information processing system 10. As noted above, the preferred embodiment requires the assignment of two icon to each application program and the alternate embodiment utilizes multiple colors or shades to indicate a status change. The second alternate embodiment also only requires the assignment of a single status icon. However, the second alternate embodiment utilizes the blinking of the status icon to indicate a status change of the application program. The flow diagram shown in Fig. 9 is similar to that shown in Fig. 7, thus, the similar numerals will be used to explain the alternate embodiment. In step 80″, system 10 determines whether an action to be performed on an application window associated with a selected application program is to minimize the application window. If the application window is to be minimized, steps 82″, 84″ and 86″ clears an update flag, displays a non-blinking status icon, and sets a minimized flag, respectively. Step 88″ determines whether the action to be performed is to update the virtual buffer associated with the selected application program. As noted above, an update of the virtual display buffer indicates a change of status of the selected application program. The change of status further indicates that the selected application program has completed its assigned task or that the selected application program needs the attention of the user. Step 90″ updates the virtual display buffer. Step 92″ determines whether the minimized flag is presently set. Step 93″ determines whether the update to the virtual display buffer is a first update. If it is determined that the update is the first update steps 94″ and 96″ facilitates the blinking of the status icon and sets the update flag, respectively.

Step 98″ determines whether the action to be performed is a refresh action. As noted above, an application window may overlay another window or an icon. The refresh action is performed when an icon has been obscured or overlayed by an application window and the window is either moved to a different position on the screen whereby the icon is no longer obscured or overlayed or the window is minimized. Step 100″ determines whether the update flag has been set while the icon was obscured or overlayed. Step 102″ facilitates the display of the blinking status icon if the update flag has been set. Step 104″ displays the non-blinking status icon if the update flag has not been set.

In operation and referring to Figs. 2, 3 and 4, for purposes of illustration and not limitation, it is assumed that a user of the system 10 (Fig. 1) has application windows 44 through 52 displayed on the screen of the display device 20. In the preferred embodiment, the user utilizes the mouse 29 to move the cursor to control area 34 associated with the primary window, which is application window 44, and depresses the button on the mouse. This action facilitates the minimization of the application window 44 and the display of a no-update icon, such as icon 56. As noted above, the no-update icon remains displayed on the screen of the display unit until the application program associated therewith completes it assigned task or requires the attention of the user. In response to the completion of the assigned task or the application program requiring the attention of the user, the virtual display buffer associated with the application program is updated. The updating of the virtual display buffer facilitates the display of an update icon. The display of the update icon immediately informs the user of a change of status of the application program associated therewith. In response to the display of the update icon, the user may take the necessary action required for that application program without performing any unnecessary activity in regards to other application programs being executed on system 10.

Alternately, the user may use keyboard 22 (Fig. 1) in minimizing the application window 44. In this case, the user moves the cursor within control area 32 and depresses a control key, such as an enter key. System 10, in response to the position of the cursor and the depression of the control key, facilitates the display of a system menu within the application window 44 as shown in Fig. 10. Thereafter, one of a plurality of actions set forth in the menu may be selected by depressing the control keys associated with the selected action. If the minimize action is selected, the application window is replaced by the no-update icon in the same manner as noted above. If the user desires to restore an application window, the cursor is moved coincident with a selected icon and the control keys associated with the restore action are depressed.

While the invention has been particularly shown and described with reference to a preferred embodiment, it will be understood by those skilled in the art that various changes in form and detail may be made without departing from the scope of the invention.

## Claims

1. A method of monitoring the status of an application program being executed on an information processing system comprising the steps of:
displaying a first icon associated with said application program on a display unit of said system;
determining whether a virtual display buffer associated with said application program has been updated; and
displaying, in response to said virtual display buffer being updated, a second icon associated with said application program on said display unit to indicated a change in the status of said application program.

2. A method as claimed in claim 1 further including the step of minimizing an application window associated with said application prior to said step of displaying said first icon.

3. A method as claimed in any of claims 1 or 2 further including the step of refreshing said first or second icon if said icon has been overlayed by an application window.

4. A method as claimed in any of claims 2 or 3 further including the step of restoring said minimized application window subsequent to the step of display said second icon.

5. A method as claimed in any preceding claim, wherein a plurality of application programs are monitored, a first icon and a second icon being associated with each said application program.

6. A method as claimed in any preceding claim wherein said first icon is a status icon displayed utilizing a first colour and said second icon is said status icon displayed utilizing a second colour.

7. A method as claimed in any of claims 1 to 5, wherein said first icon is a status icon displayed continuously and said second icon is said status icon displayed intermitently.

8. An information processing system having means for monitoring the status of an application program comprising:
a display system displaying a first icon associated with said application program on a display unit of said system;
control logic determining whether a virtual display buffer associated with said application program has been updated; and
said display system displaying, in response to said virtual display buffer being updated, a second icon associated with said application program on said display unit to indicate a change in the status of said application program.

9. An information processing system as claimed in claim 8, wherein said first icon is a status icon displayed utilizing a first colour and said second icon is said status icon displayed utilizing a second colour.

10. An information processing system as claimed in claim 8, wherein said first icon is a status icon displayed continuously and said second icon is said status icon displayed intermitently.

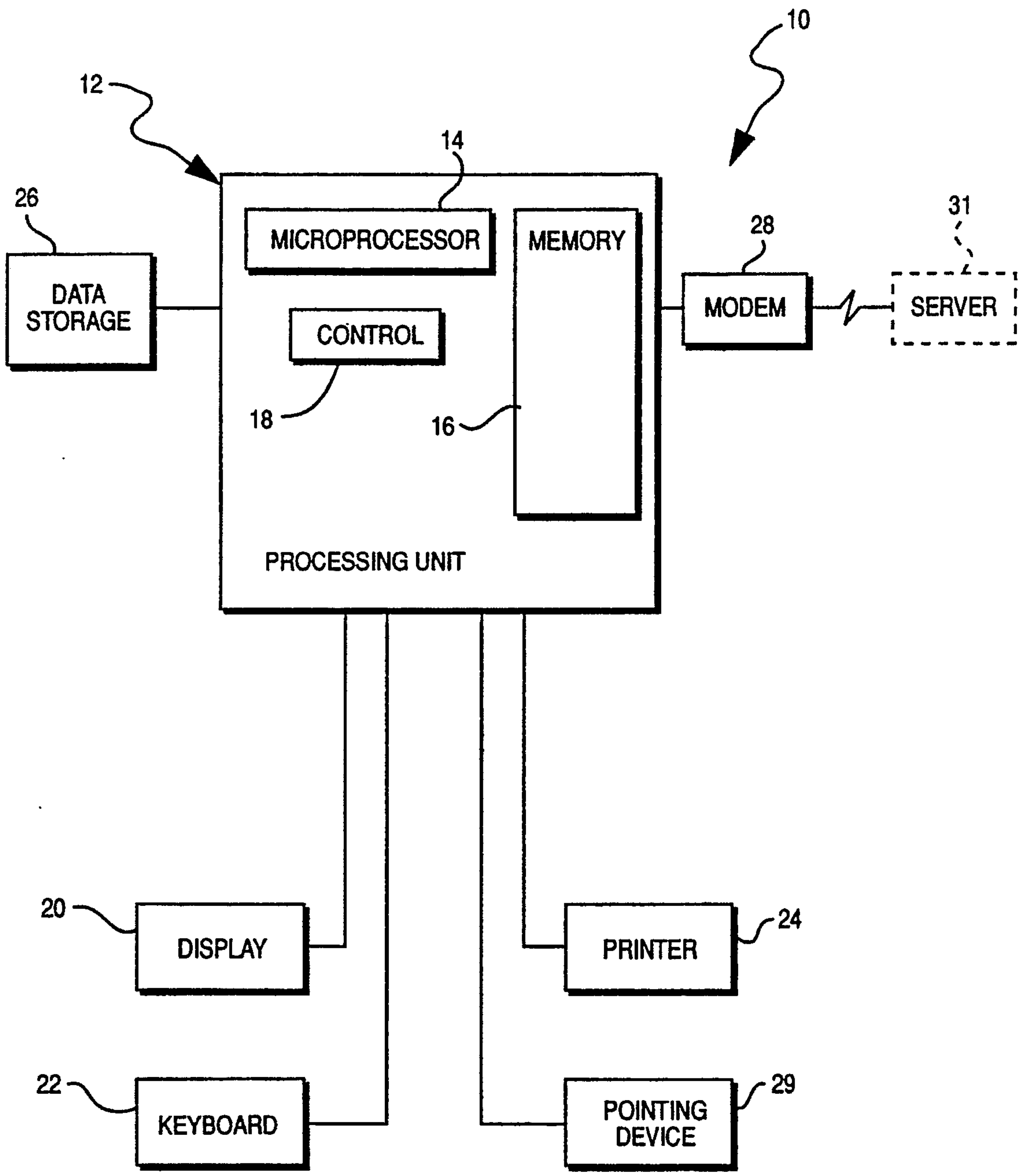
10
12
14
26
MICROPROCESSOR
MEMORY
31
28
DATA
STORAGE
MODEM
SERVER
CONTROL
18
16
PROCESSING UNIT
20
DISPLAY
PRINTER
24
22
KEYBOARD
POINTING
DEVICE
29

FIG. 1

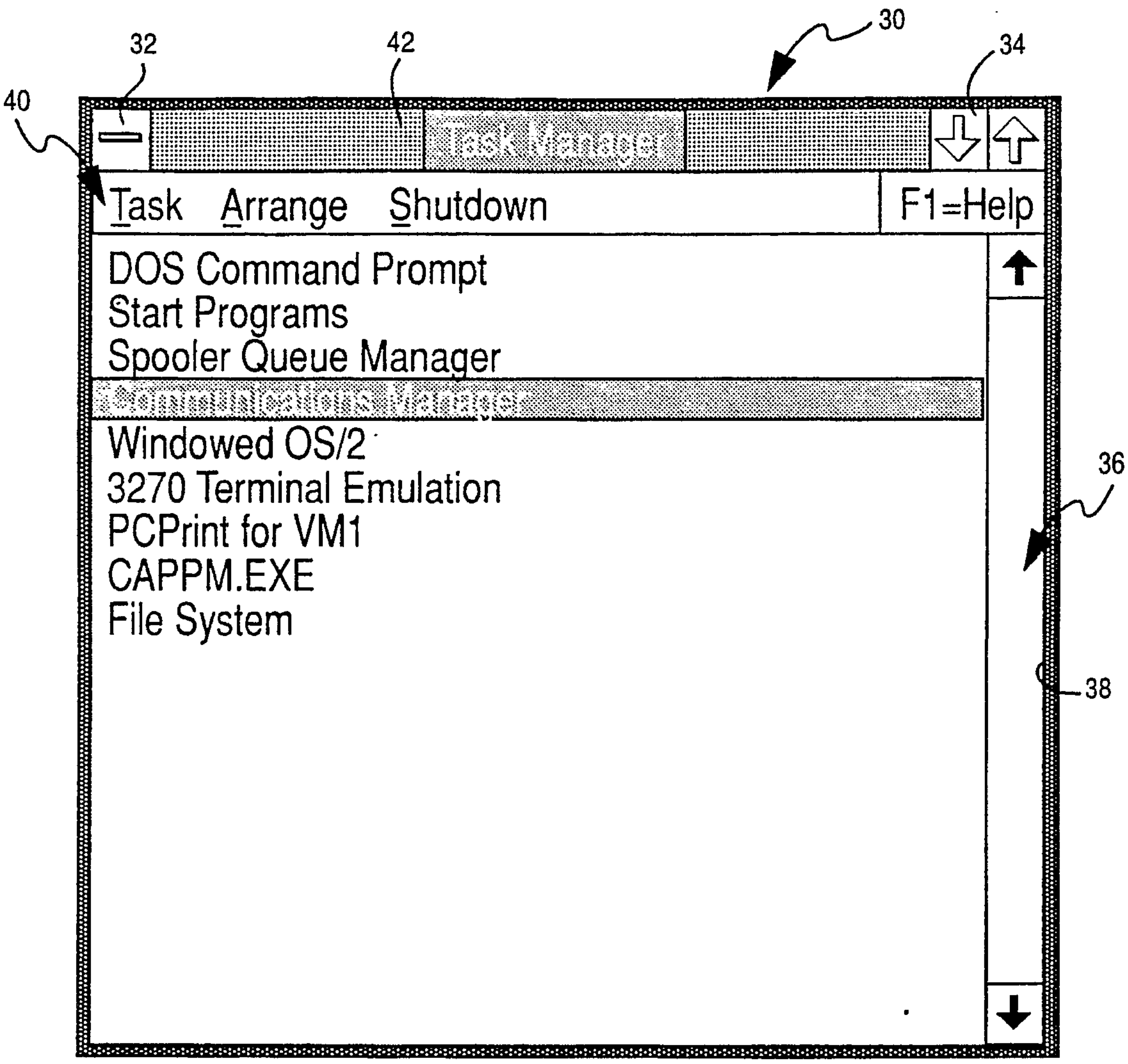


FIG. 2

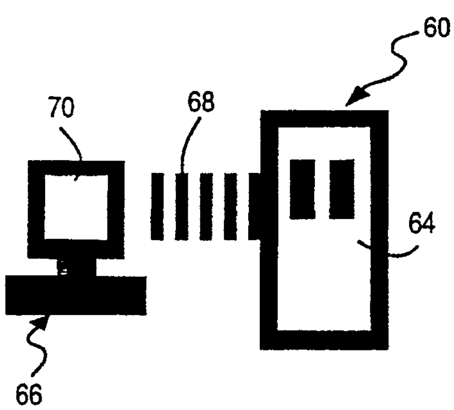


FIG. 5

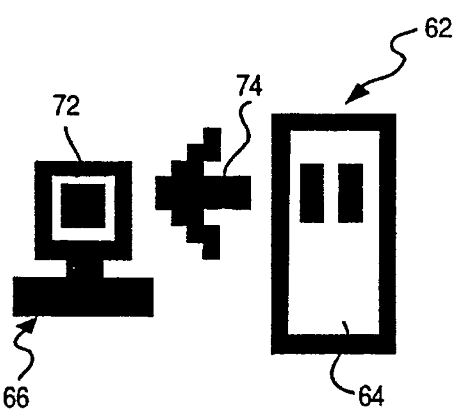


FIG. 6

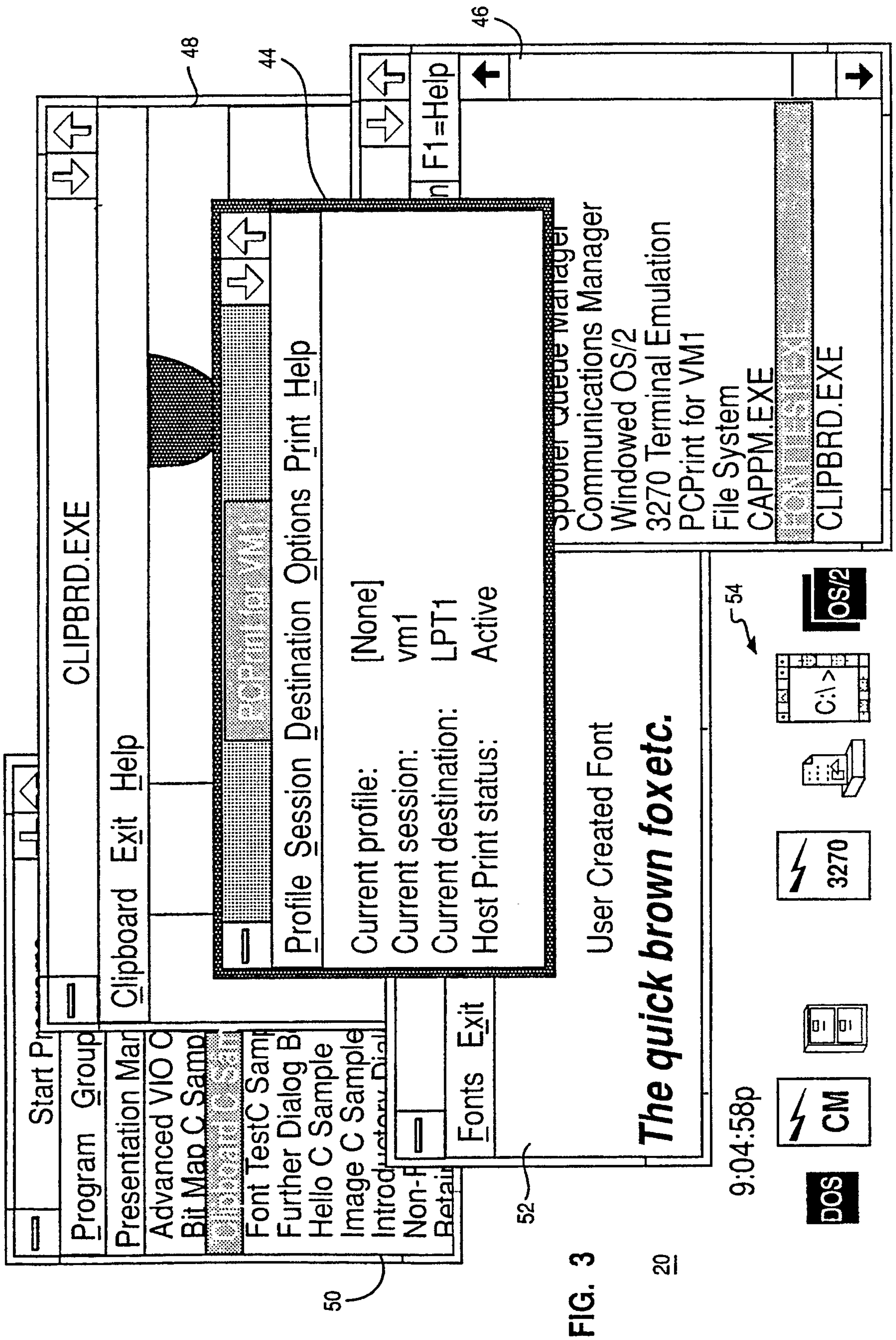
48
44
46
CLIPBRD.EXE
Clipboard Exit Help
PCPrint for VM1
Profile Session Destination Options Print Help
Current profile: [None]
Current session: vm1
Current destination: LPT1
Host Print status: Active
User Created Font
The quick brown foxetc.
Fonts Exit
F1=Help
Communications Manager
Windowed OS/2
3270 Terminal Emulation
PCPrint for VM1
File System
CAPPM.EXE
CLIPBRD.EXE
Start Pr
Program Group
Presentation Man
Advanced VIO C
Bit Map C Samp
Font TestC Samp
Further Dialog B
Hello C Sample
Image C Sample
Non-F
Retai
50
52
54
9:04:58p
DOS
CM
3270
C:\>
OS/2

FIG. 3

20

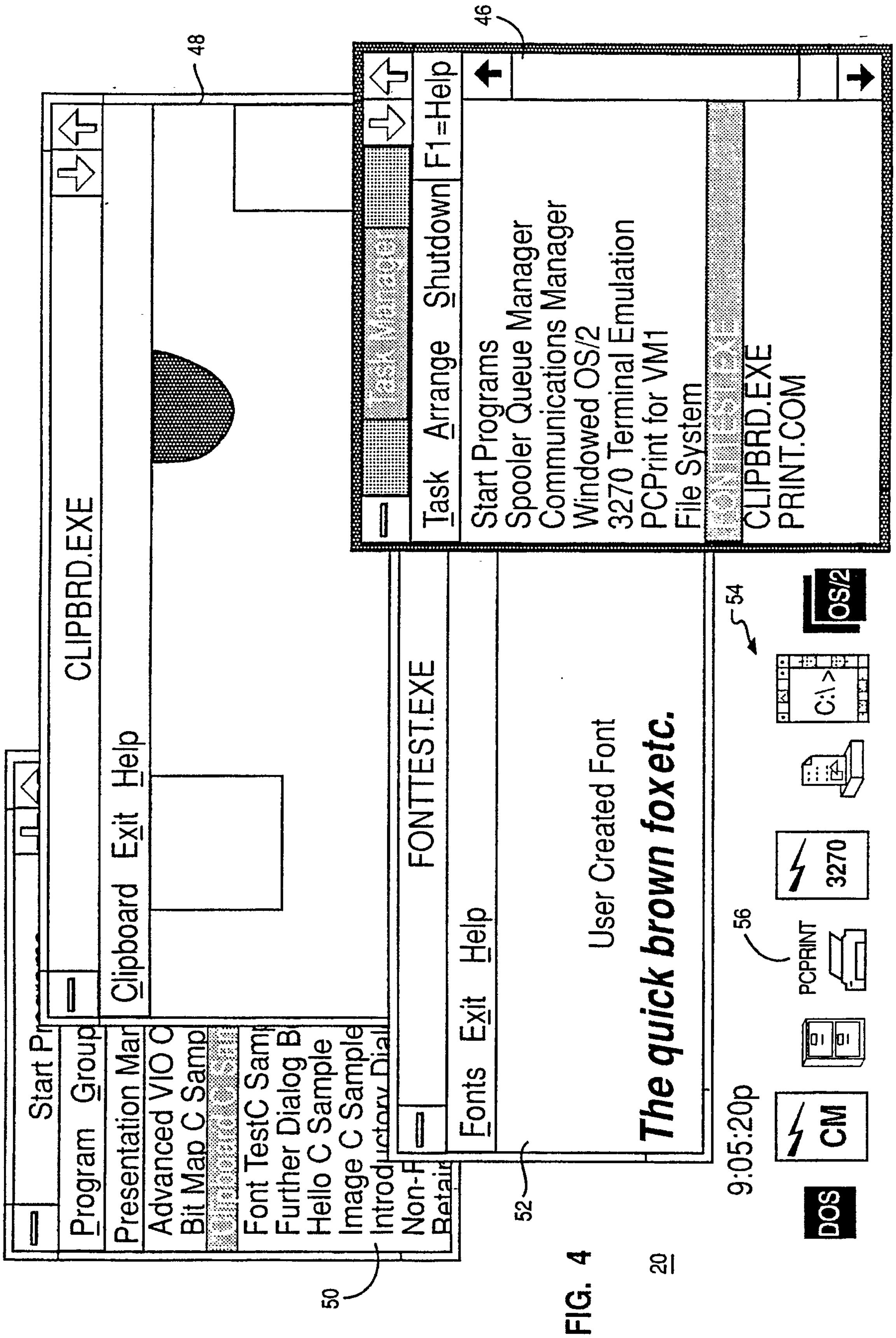
48
46
CLIPBRD.EXE
Clipboard Exit Help
Task Arrange Shutdown F1=Help
Start Programs
Spooler Queue Manager
Communications Manager
Windowed OS/2
3270 Terminal Emulation
PCPrint for VM1
File System
CLIPBRD.EXE
PRINT.COM
FONTTEST.EXE
Fonts Exit Help
User Created Font
The quick brown foxetc.
Start P
Program Group
Presentation Mar
Advanced VIO C
Bit Map C Samp
Font TestC Samp
Further Dialog B
Hello C Sample
Image C Sample
Non-F
50
52
54
56
9:05:20p
DOS
CM
PCPRINT
3270
C:\>
OS/2

FIG. 4

20

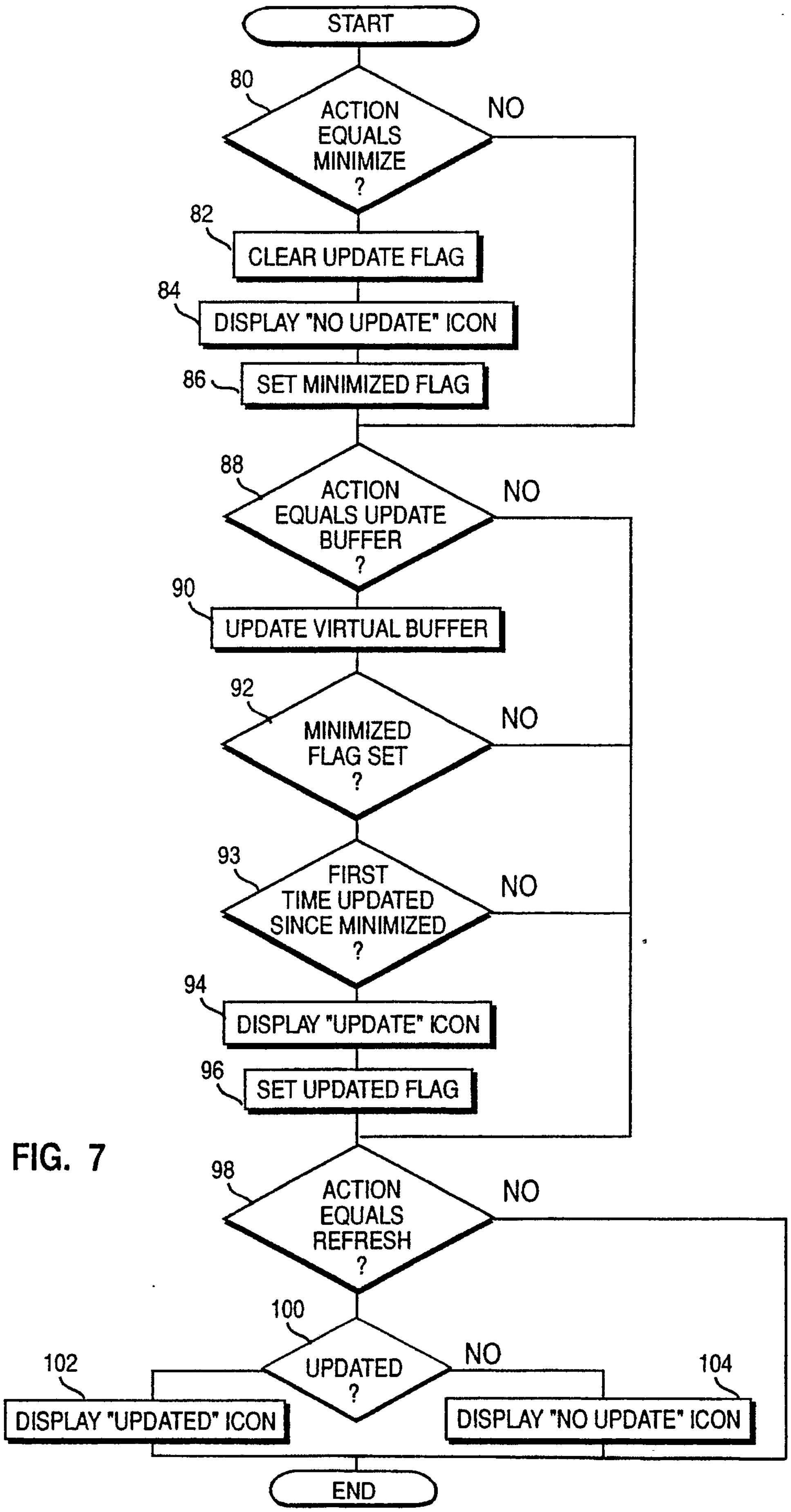
START
80
ACTION EQUALS MINIMIZE ?
NO
82
CLEAR UPDATE FLAG
84
DISPLAY "NO UPDATE" ICON
86
SET MINIMIZED FLAG
88
ACTION EQUALS UPDATE BUFFER ?
NO
90
UPDATE VIRTUAL BUFFER
92
MINIMIZED FLAG SET ?
NO
93
FIRST TIME UPDATED SINCE MINIMIZED ?
NO
94
DISPLAY "UPDATE" ICON
96
SET UPDATED FLAG
98
ACTION EQUALS REFRESH ?
NO
100
UPDATED ?
NO
102
DISPLAY "UPDATED" ICON
104
DISPLAY "NO UPDATE" ICON
END

FIG. 7

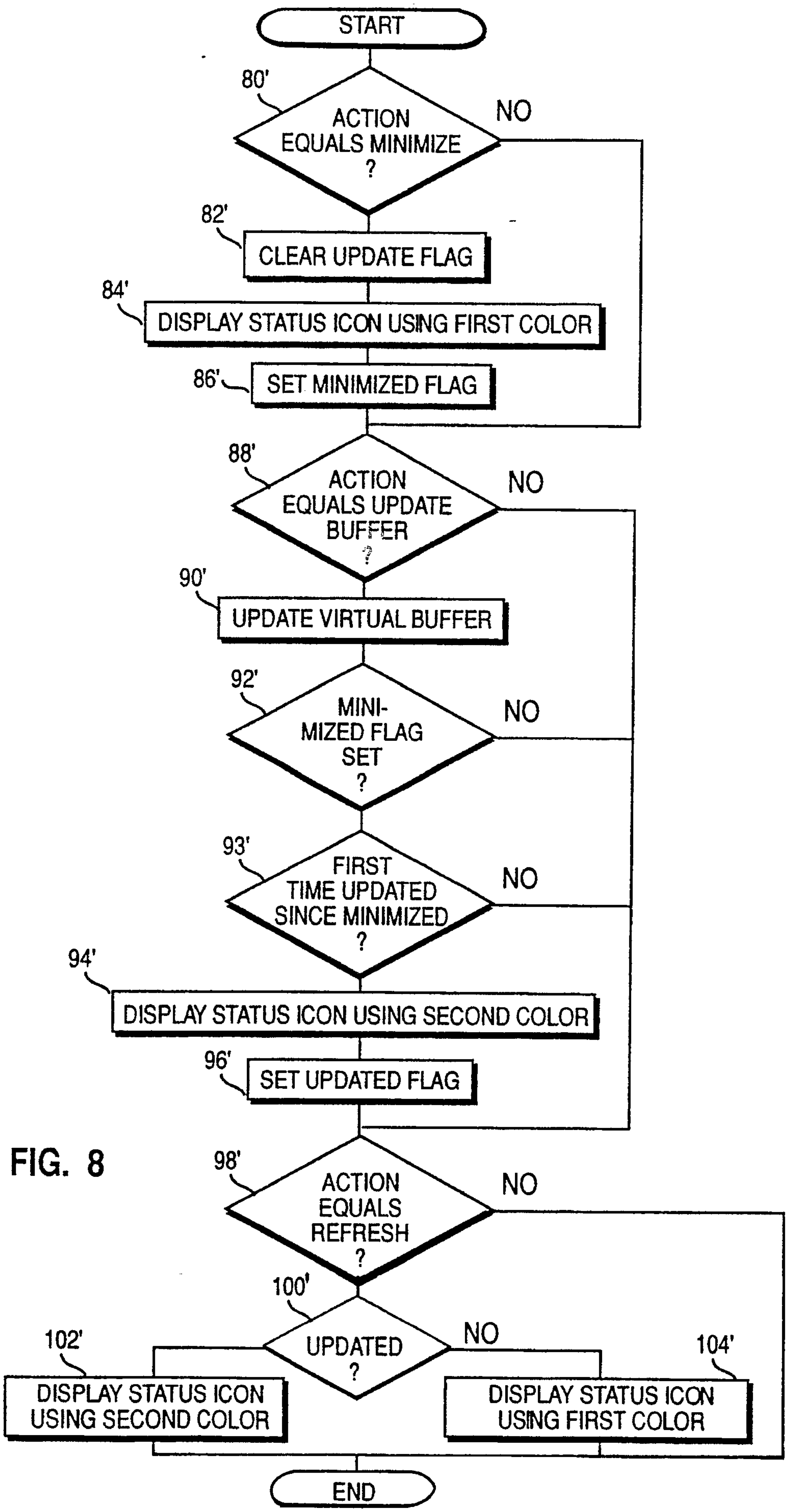
START
80'
ACTION EQUALS MINIMIZE ?
NO
82'
CLEAR UPDATE FLAG
84'
DISPLAY STATUS ICON USING FIRST COLOR
86'
SET MINIMIZED FLAG
88'
ACTION EQUALS UPDATE BUFFER ?
NO
90'
UPDATE VIRTUAL BUFFER
92'
MINI-MIZED FLAG SET ?
NO
93'
FIRST TIME UPDATED SINCE MINIMIZED ?
NO
94'
DISPLAY STATUS ICON USING SECOND COLOR
96'
SET UPDATED FLAG
98'
ACTION EQUALS REFRESH ?
NO
100'
UPDATED ?
NO
102'
DISPLAY STATUS ICON USING SECOND COLOR
104'
DISPLAY STATUS ICON USING FIRST COLOR
END

FIG. 8

FIG. 9

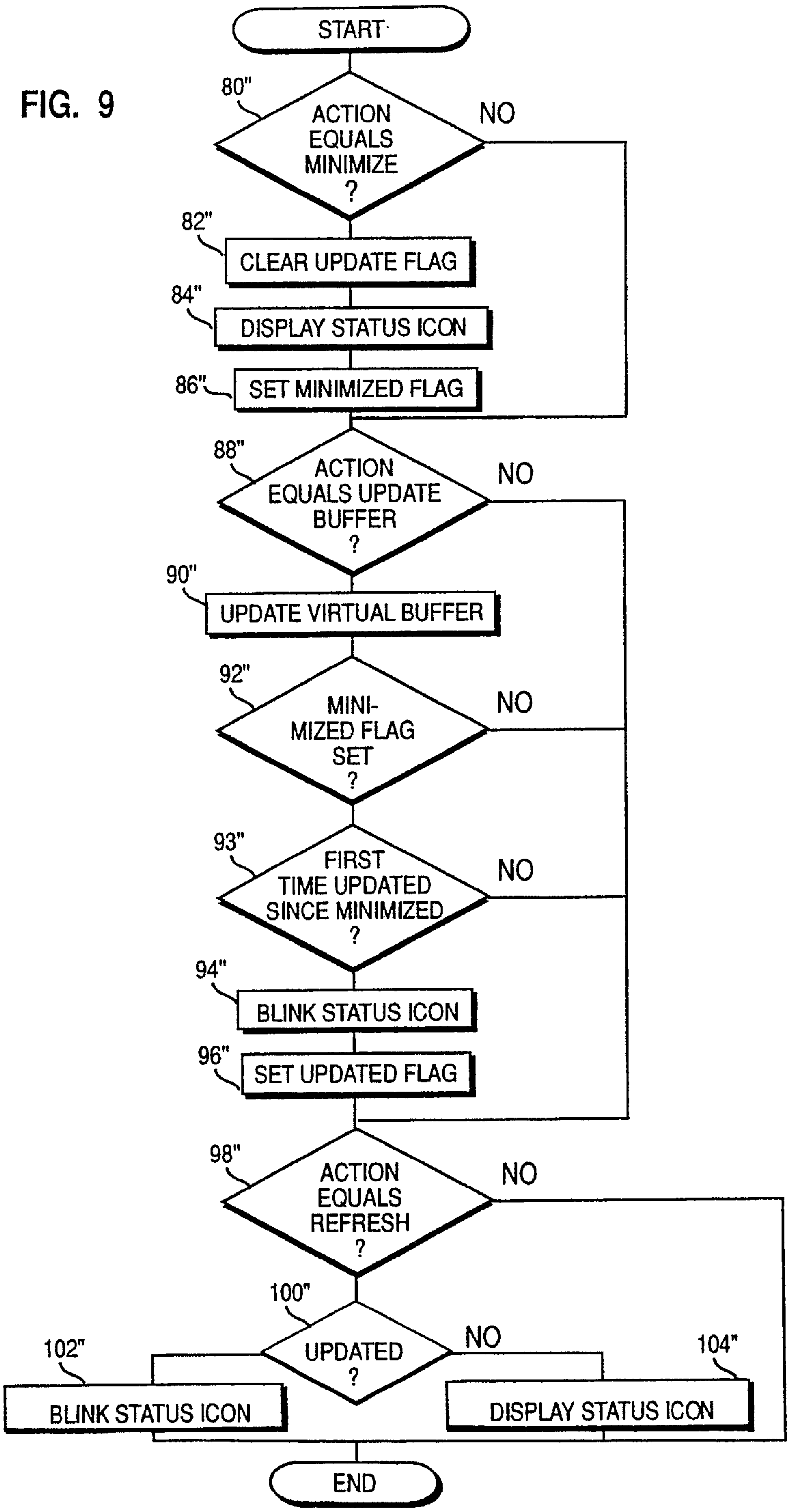
START
80"
ACTION EQUALS MINIMIZE ?
NO
82"
CLEAR UPDATE FLAG
84"
DISPLAY STATUS ICON
86"
SET MINIMIZED FLAG
88"
ACTION EQUALS UPDATE BUFFER ?
NO
90"
UPDATE VIRTUAL BUFFER
92"
MINI-MIZED FLAG SET ?
NO
93"
FIRST TIME UPDATED SINCE MINIMIZED ?
NO
94"
BLINK STATUS ICON
96"
SET UPDATED FLAG
98"
ACTION EQUALS REFRESH ?
NO
100"
UPDATED ?
NO
102"
BLINK STATUS ICON
104"
DISPLAY STATUS ICON
END

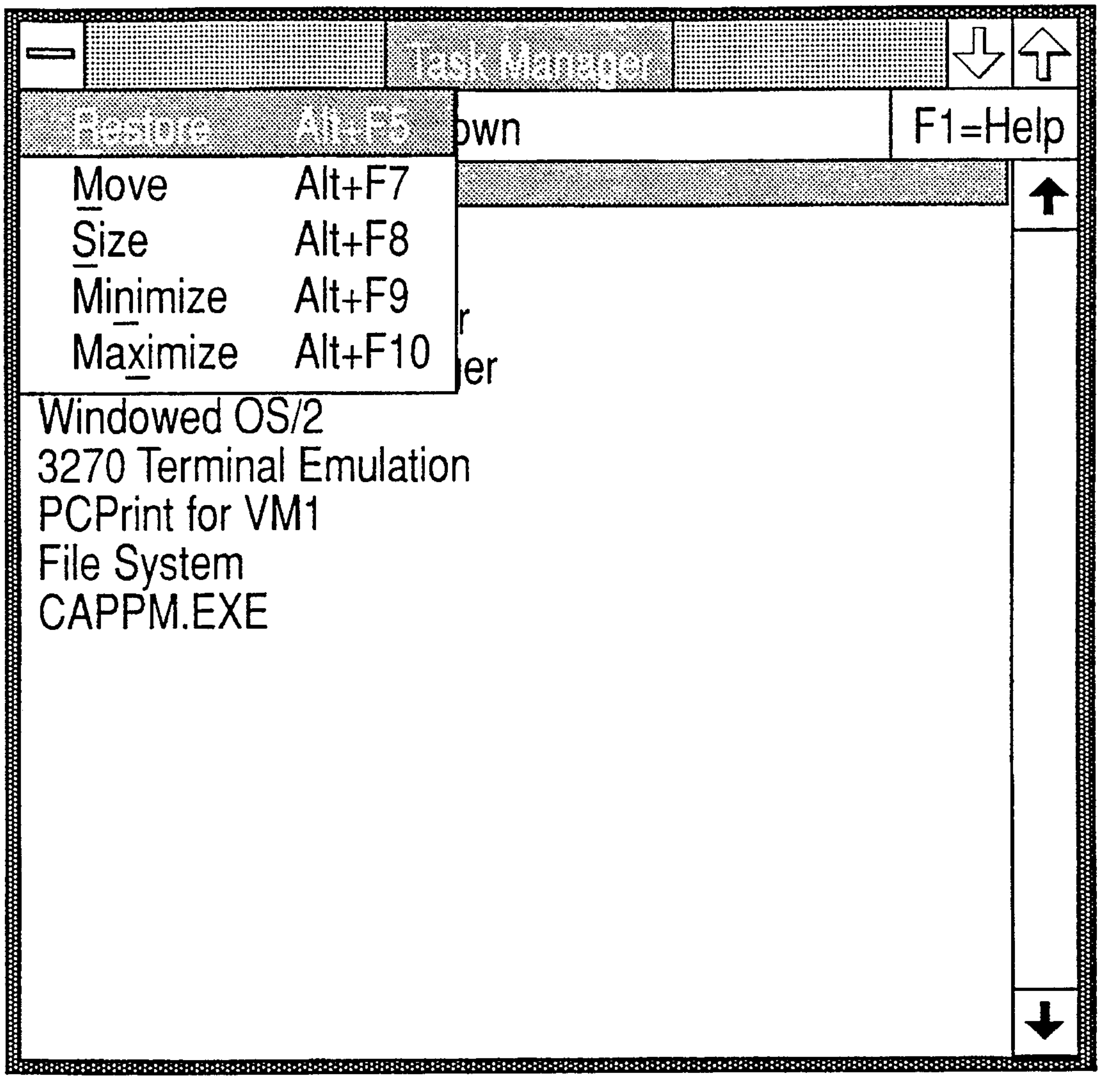
Task Manager
Restore Alt+F5
Move Alt+F7
Size Alt+F8
Minimize Alt+F9
Maximize Alt+F10
F1=Help
Windowed OS/2
3270 Terminal Emulation
PCPrint for VM1
File System
CAPPM.EXE

FIG. 10